# EUROPÄISCHE PATENTSCHRIFT

(11) **EP 0 646 486 B1**
(45) Veröffentlichungstag und Bekanntmachung des Hinweises auf die Patenterteilung: **11.06.1997**
(21) Anmeldenummer: 94114694.6
(22) Anmeldetag: 19.09.1994
(51) Int. Cl.: B60K 13/04, F16F 1/36

(54) **Elastische Aufhängung zur Befestigung von dynamisch beanspruchten Funktionsteilen**
Elastic suspension for fixing dynamically stressed parts
Suspension électrique pour fixer des éléments, sollicités dynamiquement

(30) Priorität: 02.10.1993 DE 4333643
(43) Veröffentlichungstag der Anmeldung: 05.04.1995
(73) Patentinhaber: SAAR-GUMMIWERK GmbH, 66687 Wadern-Büschfeld (DE)
(72) Erfinder: Ihle, Erich Dr., D-66687 Wadern (DE)

(56) Entgegenhaltungen:
- EP-A- 0 036 994
- DE-C- 4 026 497
- DE-U- 9 216 981
- US-A- 4 116 411
- US-A- 4 550 795
- US-A- 4 638 965

## Beschreibung

Die Erfindung betrifft eine elastische Aufhängung zur Befestigung von Abgasanlagen an der Tragkonstruktion von Fahrzeugen mittels Federelement aus Gummiwerkstoff, wobei das Federelement als scheibenförmiger Vollkörper mit Montagelöcher zur Aufnahme der Befestigungselemente ausgeführt ist.

Elastischen Aufhängungen zur Lagerung von Auspuffanlagen und Katalysatoren sind beispielsweise aus der DE-C-26 58 358 und der US-A-4116411 bekannt.

Die in der DE-C-2658358 offenbarte Aufhängung besteht aus einem im wesentlichen schlaufen- bzw. ringförmigen Federelement aus einem kompakten gummiartigen Material. Im oberen und unteren Bereich sind einander gegenüberliegend jeweils ein etwa halbkreisförmiger Schlitz vorgesehen, in die die freien Enden der Verbindungsbügel zum Fahrzeugboden einerseits und zur Auspuffanlage andererseits eingeschoben werden. Die geometrische Ausbildung und Anordnung der werkstofffreien Mittelbereiche ist bestimmend für die Elastizität und Einfederung des Federelementes, wobei die Stege bei der Einfederung als Begrenzung dienen. Zur Verstärkung ist im schlaufen- bzw. ringförmigen Außenbereich des Federelementes eine zugfeste, jedoch federndnachgiebige Einlage aus Stahldraht oder Federstahlband eingebettet.

Bei der in der US-A-4116411 offenbarten Aufhängung handelt es sich ebenfalls um eine Vorrichtung zur Aufhängung einer Abgasleitung am Fahrzeugrahmen, bei der zwei spezifisch geformte metallische Befestigungsstangen bzw. Befestigungshaken in mehreren alternativen Geometrien, je einmal am Fahrzeugrahmen und einmal an der Abgasleitung befestigt und miteinander mittels eines elastischen gummiartigen Blockelementes zugbelastbar gekoppelt sind.

Ein Nachteil dieser bekannten Aufhängungen ist die herzustellende Gummi-Metall-Verbindung. Die Herstellung dieser Verbindung ist sehr aufwendig und teuer. Andererseits erschwert und verteuert gerade diese Verbindung wieder eine spätere Trennung und Wiederverwertung der Werkstoffe beim Recycling, dem eine immer größere Bedeutung zukommt.

Insbesondere aber arbeiten derartige Aufhängungen nicht immer im linearen Bereich. Deren Federkennlinie zeigt vielmehr einen relativ kleinen linearen Bereich mit kleinem Gradienten und steigt dann progressiv an. Ohne Berücksichtigung des statischen Federweges durch das Eigengewicht der Auspuffanlage wird jedoch eine Federkennlinie mit Schwingungswegen von ca. 10 mm mit weicher Abfederung angestrebt. Erst bei Schwingungswegen größer als 10 mm sollte die Federkennlinie progressiv ansteigen.

Aufgabe der vorliegenden Erfindung ist es, eine elastische Aufhängung bereitzustellen, die in einem ausreichend großen Arbeitsbereich eine lineare, weiche Kennlinie mit daran anschließendem progressiven Bereich aufweist, die zudem preiswert herstellbar und auch später problemlos wiederzuverwerten ist.

Diese Aufgabe wird bei einer elastischen Aufhängung der eingangs genannten Art dadurch gelöst, daß das Federelement aus geschlossenzellig geschäumtem Gummiwerkstoff hergestellt wird.

Während bei den bekannten Aufhängungen die Federkennlinie durch die geometrische Formgebung sowie Größe und Anordnung der werkstofffreien Bereiche bestimmt ist, kann bei der erfindungsgemäßen Aufhängung die gewünschte Federkennlinie sehr einfach über die Porengröße und den Schäumungsgrad des Gummiwerkstoffes eingestellt werden.

Außer Aufnahmelöchern oder -schlitzen zum Anschluß der Abgasanlage und ggf. der Verbindung zur Tragkonstruktion des Fahrzeuges weist der Querschnitt des Federelementes keine weiteren Werkstofflücken auf.

Ein Indikator für die Porengröße und den Schäumungsgrad ist die Raumdichte des geschäumten Gummiwerkstoffes. Zweckmäßigerweise wird deshalb als Gummiwerkstoff, vorzugsweise EPDM (Ethylen-Propylen-Dien-Terpolymer), mit einer Raumdichte zwischen 300 kg/m³ und 1 000 kg/m³ verwandt.

Das erfindungsgemäße Federelement zeichnet sich zudem durch eine große Konstanz der Federkennlinie über einen langen Einsatzzeitraum auch bei hohen Einsatztemperaturen aus. Die üblichen Betriebstemperaturen an der Aufhängung liegen bei 70 bis 120 °C. Durch die geschlossenzellige Schaumstruktur kann auch bei einer Beschädigung des Federelementes keine Feuchtigkeit eindringen, die unter Umständen die Federkennlinie negativ beeinflußt.

Es ist weiterhin zweckmäßig, das Federelement in eine bereits bekannte, sogenannte Verliersicherung einzusetzen oder einzurahmen, da diese das Federelement zumindest teilweise umschließt und bei dessen Bruch ein Abreißen der Abgasanlage verhindert. Als Verliersicherung kann z. B. ein das Federelement umfangsseitig ganz umschließendes zugfestes, biegeelastisches Stützband aus Metall, Kunststoff oder Textilmaterial dienen. In diesem Fall muß das Federelement sowohl Aufnahmelöcher - Montagelöcher - für den Anschluß der Abgasanlage als auch die Verbindung zur Tragkonstruktion des Fahrzeuges aufweisen.

Die Federkennlinie wird dann durch die Elastizität des Stützbandes mitbestimmt.

Bei einer weiteren vorteilhaften Ausführungsform ist die Verliersicherung als starre Stützplatte bzw. Haltebügel ausgebildet, wobei dann zweckmäßigerweise die Verliersicherung mit dem Fahrzeugboden verschraubbar ist und das Federelement lediglich die Montagelöcher zum Anschluß der Abgasanlage aufweisen muß.

Federelement und Verliersicherung können dabei mechanisch miteinander verbunden oder verklebt sein. Alle diese Verbindungen sind leicht herzustellen, aber auch leicht wieder zu lösen, so daß bei der späteren Entsorgung eine wirtschaftliche Trennung und Wiederverwertung der einzelnen Werkstoffe gegeben ist.

Im folgenden wird die Erfindung anhand der in den Figuren 1 bis 3 dargestellten Ausführungsbeispiele weiter erläutert.

Es zeigen:
- Figur 1:: mögliche Ausführungsformen einer Aufhängung mit einem umfangsseitig von einem Stützband als Verliersicherung umschlossenen Federelement 1
- Figur 2:: mögliche Ausführungsformen einer Aufhängung mit einem in einen Haltebügel eingesetzten Federelement 1
- Figur 3:: mögliche Ausführungsformen von Aufhängungen mit in eine Stützplatte eingesetztem Federelement 1

Eine erfindungsgemäße Aufhängung besteht aus einem scheibenförmigen Federelement 1 aus geschlossenzellig geschäumtem Gummiwerkstoff. Durch entsprechende Abstimmung von Schäumungsgrad, Schaumstruktur und Härte kann der Bereich der Linearität sowie der Gradient der Federkennlinie der Beanspruchung durch die zu lagernde Abgasanlage angepaßt werden.

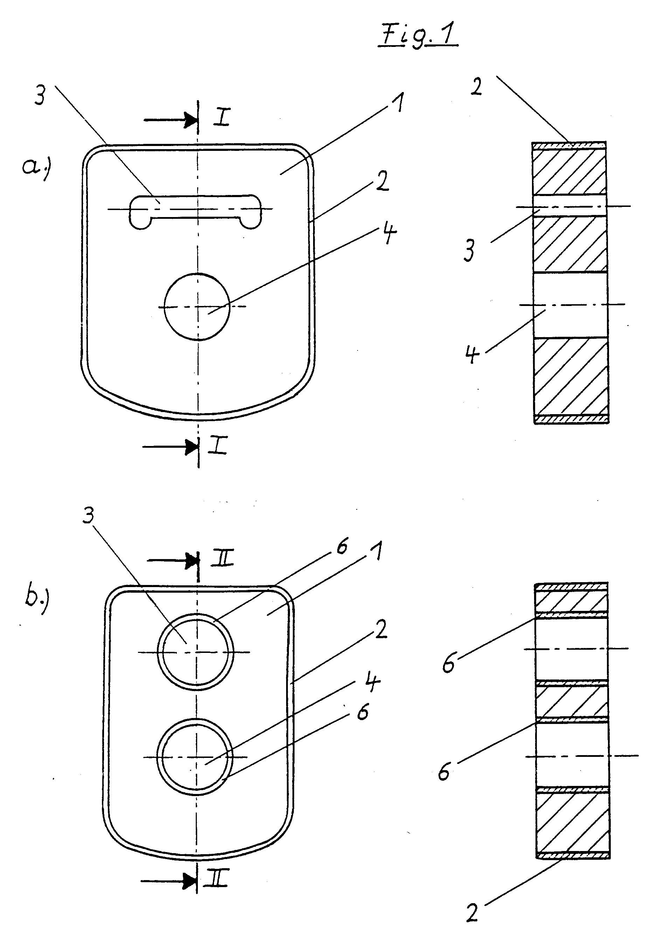

Im Beispiel der Figur 1 ist das Federelement 1 von einem zugfesten, biegeelastischen Stützband als Verliersicherung 2 umschlossen. Die Verbindung von Stützband und Federelement 1 kann rein mechanisch oder durch Verkleben erfolgen. Das Federelement 1 weist sowohl eine untere Aufnahme 4 für das Funktionsteil als auch eine obere Aufnahme 3 zum Anschluß an die Tragkonstruktion auf. In die Aufnahme 3 und/oder 4 können zusätzlich Buchsen 6 aus Metall oder Kunststoff eingesetzt sein. Die Form des Federelementes 1 sowie der Aufnahmen 3 und 4 sind den jeweiligen Verbindungselementen angepaßt. So sind im Beispiel der Figur 1a die obere Aufnahme 3 schlitzartig, die untere Aufnahme 4 kreisförmig ausgebildet. Im Beispiel der Figur 1b sind beide Aufnahmen 3 und 4 kreisförmig ausgebildet.

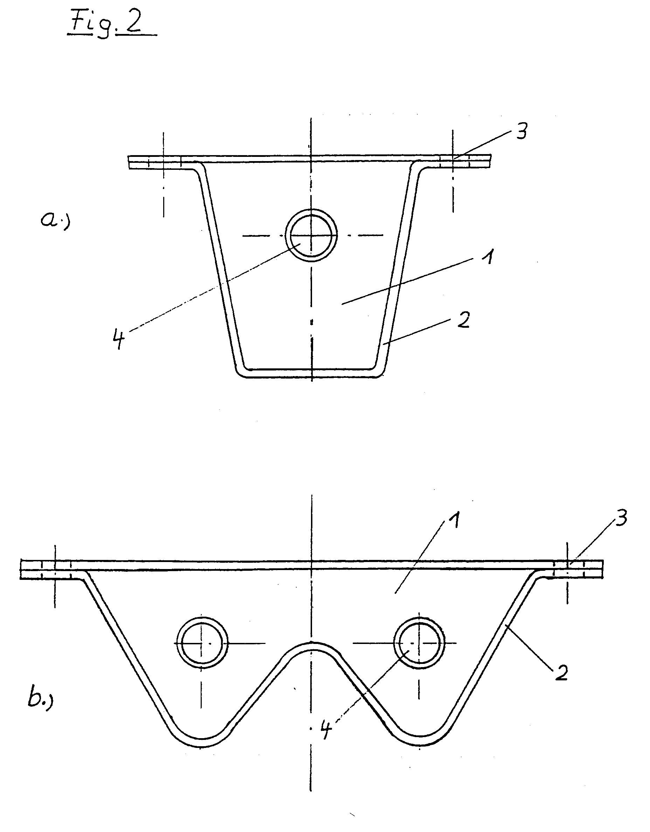

Bei den in Figur 2 gezeigten Ausführungsformen ist das Federelement 1 jeweils in einen starren Haltebügel als Verliersicherung 2 eingesetzt. Das Federelement 1 weist dabei lediglich eine oder mehrere Aufnahmen 4 zum Anschluß des Funktionsteiles auf, während die Aufnahmen 3 zum Anschluß an die Tragkonstruktion, in den gezeigten Beispielen durch eine einfache Verschraubung, an der Verliersicherung 2 vorgesehen sind.

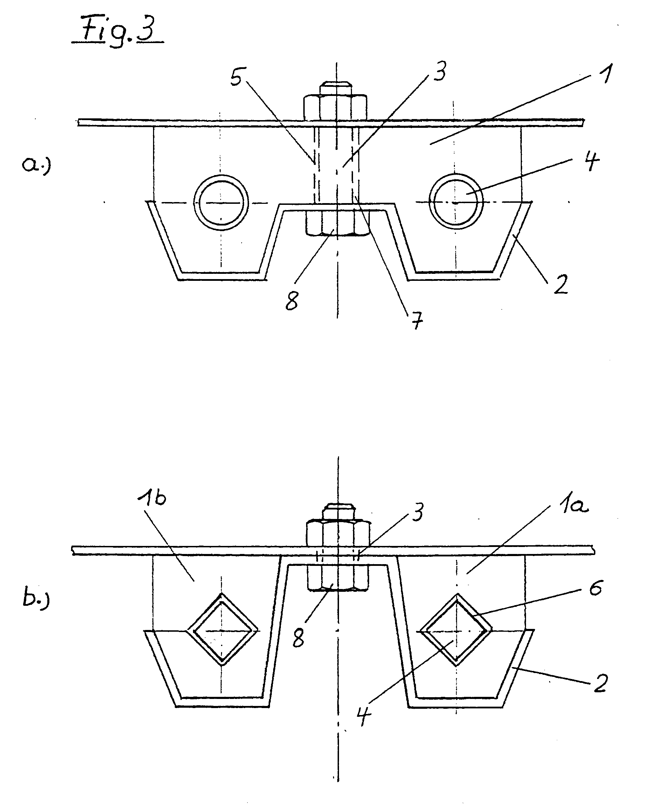

Bei den Ausführungsformen gemäß Figur 3 ist das Federelement 1 jeweils in eine Stützplatte als Verliersicherung 2 eingesetzt, wobei die angepaßten Geometrien von Federelement 1 und Verliersicherung 2 eine sichere Lagerung des Federelementes 1 gewährleisten. Die Verliersicherung 2 ist wiederum über die Aufnahme 3 mit der Tragkonstruktion verschraubbar, wobei im Beispiel der Figur 3a die Befestigungsschraube 8 zusätzlich durch eine entsprechende Bohrung 5 im Federelement 1 geführt ist und so das Federelement 1 zusätzlich gesichert ist. In die Bohrung 5 kann - lose oder z. B. mit der Verliersicherung 2 verbunden - eine Führungshülse 7 eingesetzt sein.

Im Beispiel der Figur 3b sind in die Verliersicherung 2 zwei einzelne Teil-Federelemente 1a, 1b eingelegt und die Verliersicherung 2 mittig unmittelbar - analog der Verliersicherung 2 gemäß Figur 2 - mit der Tragkonstruktion verschraubt.

Die Geometrien der Federelemente 1 , der Aufnahmen 3 und 4 sowie der Einsatz von Buchsen 6 in die Aufnahmen 3 und 4 werden jeweils durch das anzuschließende Funktionsteil und die aufzunehmenden Belastungen vorgegeben.

## Patentansprüche

1. Elastische Aufhängung mittels Federelement (1) aus Gummiwerkstoff zur Befestigung von Abgasanlagen an der Tragkonstruktion von Fahrzeugen, wobei das Federelement (1) als ein scheibenförmiger Vollkörper mit Montagelöchern (3,4) zur Aufnahme der Befestigungselemente ausgeführt ist,
**dadurch gekennzeichnet, daß** das Federelement (1) aus geschlossenzellig geschäumtem Gummiwerkstoff besteht.

2. Aufhängung nach Anspruch 1,
**dadurch gekennzeichnet, daß** als Gummiwerkstoff ein Ethylen-Propylen-Dien-Terpolymer (EPDM) mit einer Raumdichte zwischen 300 kg/m³ und 1 000 kg/m³ verwendet wird.

3. Aufhängung nach Anspruch 1 oder 2, dadurch gekennzeichnet, daß das Federelement (1) in eine das Federelement (1) zumindest teilweise umschließende Verliersicherung (2) eingesetzt ist.

4. Aufhängung nach Anspruch 3, dadurch gekennzeichnet, daß die Verliersicherung (2) ein das Federelement (1) umfangsseitig umschließendes zugfestes, biegeelastisches Stützband ist.

5. Aufhängung nach Anspruch 3, daß die Verliersicherung (2) als starre Stützplatte ausgebildet und mit der Tragkonstruktion verschraubbar ist.

## Claims

1. Elastic mounting with a spring element (1) made of a rubber material for fixture of exhaust systems to the supporting structure of vehicles, wherein the spring element (1) takes the form of a disc-shaped solid body with assembly holes (3, 4) for accommodation of the fixing elements, characterised in that the spring element (1) is made of a closed-cell foamed rubber material.

2. Mounting according to claim 1, characterised in that an ethylene-propylene-diene-terpolymer (EPDM) with a volumetric density of between 300 kg/m³ and 1000 kg/m³ is used as the rubber material.

3. Mounting according to claim 1 or 2, characterised in that the spring element (1) is inserted in a loss-preventing retainer (2) at least partially surrounding the spring element (1).

4. Mounting according to claim 3, characterised in that the loss-preventing retainer (2) is a high-tensile, flexurally elastic supporting band surrounding the spring element (1) circumferentially.

5. Mounting according to claim 3, characterised in that the loss-preventing retainer (3) takes the form of a rigid supporting plate and can be screwed to the supporting structure.

## Revendications

1. Suspension élastique au moyen d'un élément élastique (1) en un matériau en caoutchouc pour la fixation d'installations pour gaz d'échappement de véhicules automobiles, l'élément élastique (1) étant réalisé comme un corps plein en forme de plaque avec des trous de montage pour recevoir des éléments de fixation,
caractérisée en ce que
l'élément élastique (1) se compose d'un matériau en caoutchouc mousse cellulaire.

2. Suspension selon la revendication 1,
caractérisée en ce que
comme matériau en caoutchouc, on utilise un éthylène-propylène-diène-terpolymère (EPDM) ayant une densité en volume comprise entre 300 kg/m³ et 1000 kg/m³.

3. Suspension selon la revendication 1 ou 2,
caractérisée en ce que
l'élément élastique (1) est enchâssé dans un dispositif de protection anti-perte (2) entourant au moins partiellement l'élément élastique (1).

4. Suspension selon la revendication 3,
caractérisée en ce que
le dispositif de protection anti-perte (2) est une bande de soutien élastique au pliage, résistante à la traction entourant du côté périphérique l'élément élastique (1).

5. Suspension selon la revendication 3,
caractérisée en ce que
le dispositif de protection anti-perte (2) est réalisé comme une plaque de soutien rigide et peut être fixé par vis à la construction porteuse.
